Europäisches Patentamt

(19) European Patent Office

Office européen des brevets

(11) Numéro de publication : **0 310 467 B1**

(12) **FASCICULE DE BREVET EUROPEEN**

(45) Date de publication du fascicule du brevet :
18.09.91 Bulletin 91/38

(51) Int. Cl.⁵ : **G01D 5/16, G01F 23/36, H01C 10/08**

(21) Numéro de dépôt : 88402196.5

(22) Date de dépôt : 31.08.88

(54) Dispositifs de mesure comprenant un transducteur du type rhéostat.

(30) Priorité : 02.09.87 FR 8712211

(43) Date de publication de la demande :
05.04.89 Bulletin 89/14

(45) Mention de la délivrance du brevet :
18.09.91 Bulletin 91/38

(84) Etats contractants désignés :
DE ES FR GB IT

(56) Documents cités :
EP-A- 0 023 949
GB-A- 2 048 495
GB-A- 2 083 710
US-A- 3 614 704

(73) Titulaire : JAEGER
2, rue Baudin
F-92303 Levallois-Perret (FR)

(72) Inventeur : Brunel, Daniel
17, rue des Clochettes
F-93150 Blanc-Mesnil (FR)

(74) Mandataire : Martin, Jean-Jacques et al
Cabinet REGIMBEAU 26, Avenue Kléber
F-75116 Paris (FR)

## Description

La présente invention concerne le domaine des dispositifs de mesure comprenant un transducteur du type rhéostat.

La présente invention trouve tout particulièrement application dans la conception de dispositifs de mesure comprenant un transducteur du type rhéostat, destinés à la mesure du niveau et/ou volume du carburant dans le réservoir d'un véhicule automobile.

On a déjà proposé de nombreux dispositifs destinés à cette application particulière, comprenant un équipage mobile pourvu d'un flotteur apte à suivre le niveau d'un liquide et associé au curseur d'un rhéostat, de telle sorte que ce dernier fournisse une information représentative de la position du flotteur et donc du niveau et/ou du volume de liquide.

On a ainsi déjà proposé des rhéostats formés d'un support en matériau électriquement isolant revêtu d'une piste en matériau électriquement résistant, de résistivité contrôlée, sur laquelle se déplace le curseur associé à l'équipage mobile.

Les rhéostats du type précité ont pour inconvénient de présenter une dérive dans le temps, en raison de l'usure inévitable de la piste de résistivité contrôlée, résultant du frottement occasionné par le curseur mobile.

Pour éliminer cet inconvénient, la Demanderesse a proposé et réalisé des rhéostats formés d'un support en matériau électriquement isolant, notamment en verre, revêtus d'une première piste en matériau électriquement résistant, de résistivité contrôlée, et d'une pluralité de secondes pistes séparées, réalisées en matériau conducteur, raccordées de façon échelonnée à la piste résistive et s'étendant chacune en regard du trajet de déplacement du curseur. L'information représentative du niveau ou volume de liquide est prélevée entre l'une des extrémités de la piste résistive et le curseur.

Les rhéostats ainsi proposés par la Demanderesse ont déjà rendu de grands services.

Le document US-A-3614704 décrit également un dispositif de mesure résistif comprenant, sur un support en matériau électriquement isolant, des pistes de résistance élevée et des sections d'électrode à faible résistance en contact avec ses dernières, en combinaison avec un ensemble de curseurs. L'ensemble de curseurs est déplacé à rotation sur les sections d'électrode. Plus précisément, l'ensemble de curseurs est conçu de telle sorte qu'au moins trois curseurs soient simultanément en contact avec des sections d'électrode respectives. Le dispositif proposé dans le document US-A-3614704 a pour but de tenter d'éliminer les inconvénients pouvant résulter de l'usure d'un curseur et/ou d'une section d'électrode. Il présente cependant les inconvénients suivants. Lorsque le dispositif de mesure résistif du document US-A-3614704 est utilisé en rhéostat, la résistance mesurée entre les bornes du rhéostat varie sensiblement lorsque l'un extrême des trois curseurs devant reposer contre une section d'électrode respective est déficient. De même, lorsque le dispositif de mesure résistif proposé dans le document US-A-3614704 est utilisé en potentiomètre, une partie de la résistance globale du potentiomètre est court-circuitée théoriquement par les trois curseurs devant reposer simultanément sur des sections d'électrode respective, mais la partie de résistance court-circuitée varie si l'un extrême des trois curseurs est déficient.

La présente invention a maintenant pour but d'éliminer les inconvénients de la technique antérieure et de perfectionner les dispositifs connus en les rendant surtout plus fiables et plus économiques.

Ces buts sont atteints dans le cadre de la présente invention grâce à un dispositif de mesure comportant un transducteur du type rhéostat, comprenant de façon connue en soi deux ensembles coopérant, l'un formé d'un curseur mobile et l'autre d'un support en matériau électriquement isolant revêtu d'une pluralité de pistes principales s'étendant en regard du trajet de déplacement du curseur et présentant entre elles une résistance contrôlée, dans lequel le curseur et chacune des pistes possèdent plusieurs éléments de contact respectivement en regard, et les éléments de contact de l'un au moins des deux ensembles sont décalés relativement dans la direction de déplacement du curseur, de telle sorte que lorsqu'un élément de contact du curseur est centré sur l'élément de contact associé d'une piste ménagée sur le support, un autre élément de contact du curseur est centré sensiblement sur l'intervalle ménagé entre deux éléments de contact qui lui sont associés des pistes ménagées sur le support, caractérisé par le fait que le curseur et chacune des pistes possèdent deux éléments de contact respectivement en regard, et le décalage défini entre deux éléments de contact d'un même ensemble égale la moitié du pas des pistes principales.

Cette disposition permet de garantir un contact permanent entre le curseur et l'une des pistes ménagées sur le support, malgré la discontinuité de celles-ci. La présente invention permet par conséquent de fournir une information plus fiable et plus précise quant au niveau ou volume de liquide détecté.

D'autres caractéristiques, buts et avantages de la présente invention apparaîtront à la lecture de la description détaillée qui va suivre, et à l'examen des dessins annexés, donnés à titres d'exemples non limitatifs et sur lesquels :

— la figure 1 représente une vue schématique en plan d'un dispositif conforme à un mode de réalisation préférentiel de la présente invention,

— la figure 2 représente une vue schématique de détail du même dispositif, et

— la figure 3 représente une variante de réalisation du dispositif conforme à la présente invention.

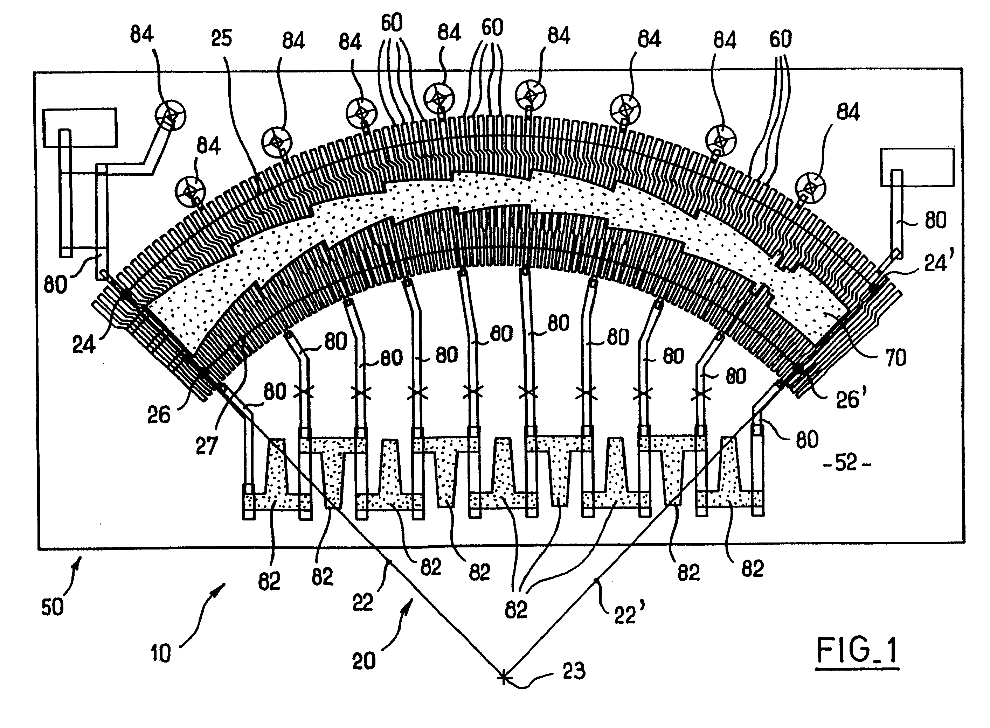

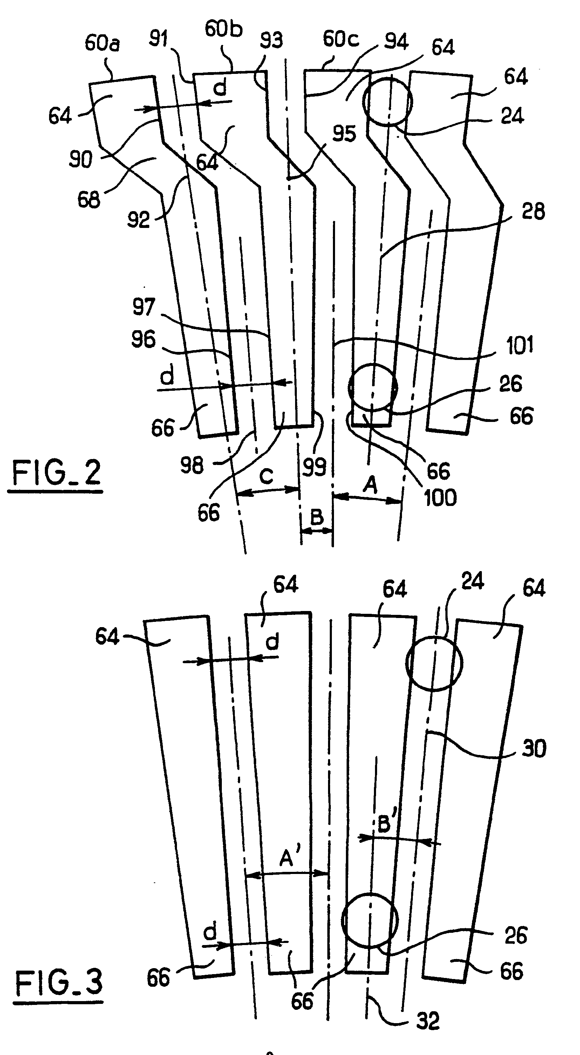

On va dans un premier temps décrire le mode de réalisation préférentiel illustré sur les figures 1 et 2 annexées.

On aperçoit sur la figure 1 annexée un rhéostat 10 comportant deux ensembles, l'un portant la référence générale 20 formé d'un levier 22 porte curseur, l'autre portant la référence générale 50 formé d'un support 52 en matériau électriquement isolant revêtu d'une pluralité de pistes principales 60, en matériau électriquement conducteur, et d'une piste auxiliaire 70 en matériau électriquement résistant.

Le support 52 est formé d'une plaque plane en matériau électriquement isolant, par exemple en céramique, alumine ou de préférence en verre.

De façon avantageuse les pistes principales 60 sont déposées dans un premier temps sur le support 52, puis la piste auxiliaire 70 en matériau électriquement résistant est déposée postérieurement sur les pistes principales 60. Les pistes principales 60 et la piste auxiliaire 70 sont de préférence réalisées par dépôt sérigraphique.

Le levier 22 porte curseur est guidé à pivotement autour d'un axe 23. Le levier pivotant 22 est de plus pourvu, de façon classique en soi, d'un flotteur (non représenté sur la figure annexée pour simplifier l'illustration) adapté pour suivre le niveau de carburant contenu dans le réservoir d'un véhicule automobile.

Le déplacement du flotteur précité, suivant le niveau de carburant, induit un pivotement du levier porte curseur 22 autour de l'axe 23.

Deux positions extrêmes du levier pivotant 22 ont été illustrées sur la figure 1 annexée sous les références 22 et 22' respectivement.

Le système de curseur porté par le levier 22 est placé en regard des pistes principales 60 électriquement conductrices.

Plus précisément encore, selon une première caractéristique de la présente invention, le système de curseur porté par le levier 22 comprend deux éléments de contact 24, 26, c'est-à-dire deux grains de contact adaptés pour reposer respectivement contre deux éléments de contact des pistes principales 60, c'est-à-dire deux plages de contact respectivement associées ménagées au niveau de chacune des pistes principales 60.

Ces deux plages de contact sont référencées 64, 66 sur la figure 2.

Par ailleurs, le trajet de déplacement du grain de contact 24 du curseur est référencé 25 sur la figure 1 tandis que le trajet de déplacement du grain de contact 26 du curseur est référencé 27 sur la figure 1. Bien entendu les trajets 25 et 27 des grains de contact 24, 26 correspondent à des secteurs de cercle centrés sur l'axe de pivotement 23.

Les pistes principales 60 sont juxtaposées et séparées l'une de l'autre. Elles sont formées de segments généralement rectilignes s'étendant radialement par rapport à l'axe de pivotement 23. En d'autres termes, les pistes principales 60 sont constituées généralement de secteurs séparés, équidistants et de même amplitude angulaire, d'une couronne centrée sur l'axe 23. La plage de contact 64 coopérant avec le grain de contact 24 du curseur est réalisée sur l'extrémité radialement externe de chaque piste principale 60. Inversement la plage de contact 66 coopérant avec le grain de contact 26 du curseur est réalisée sur l'extrémité radialement interne des pistes principales 60.

La piste auxiliaire résistive 70 a la forme générale d'un secteur continu de couronne superposé aux pistes principales 60. La piste auxiliaire 70 est placée entre les deux plages de contact 64, 66 de chaque piste principale 60. En d'autres termes, le rayon moyen de la piste auxiliaire 70 est compris entre le rayon de la plage de contact 64 radialement externe et le rayon de la plage 66 radialement interne.

La largeur (ou étendue radiale) de la piste auxiliaire 70 est modulée (lors du dépôt sérigraphique) pour définir une évolution de la résistance de la piste auxiliaire 70 tenant compte de la géométrie du réservoir.

Par ailleurs des pistes de liaison 80 en matériau électriquement conducteur sont déposées sur le support 52. Les pistes de liaison 80 prolongent certaines choisies des pistes principales 60.

Les pistes de liaison 80 peuvent être réalisées simultanément ou postérieurement aux pistes principales 60.

Certaines des pistes de liaison 80 reliées aux pistes principales 60 extrêmes du rhéostat permettent la mesure de résistance totale de la piste auxiliaire 70 et/ou la résistance définie entre l'une des extrémités de la piste auxiliaire 70 et le curseur.

Les autre pistes de liaison 80 reliées à des pistes principales intermédiaires 60 sont reliées par paire à des éléments électriquement résistants 82. Ceux-ci sont avantageusement réalisés par dépôt sérigraphique simultanément à la piste auxiliaire 70. Les éléments 82 sont ainsi reliés en parallèle de sections déterminées de la piste auxiliaire 70. Les éléments 82 peuvent être réglés au laser pour ajuster avec précision la résistance globale de section correspondante du rhéostat, afin d'éliminer les dispersions de fabrication.

Au cours du réglage précité des éléments 82, à l'aide d'un laser, la résistance aux bornes de ces éléments (et donc aux bornes des sections correspondantes du rhéostat) est mesurée au niveau de plots conducteurs 84 reliés aux bornes des éléments 82. L'élimination des dispersions de fabrication à l'aide des éléments réglables 82 est classique en soi et ne sera pas décrite plus en détail par la suite.

On va maintenant décrire avec plus de précision, en regard de la figure 2 annexée, la géométrie des pistes principales 60 électriquement conductrices déposées sur le support isolant 52, conformes à un mode de réalisation préférentiel de la présente invention.

Selon ce mode de réalisation préférentiel, les plages 64, 66 de chacune des pistes principales 60, coopérant respectivement avec les plots 24, 26 du curseur, sont formées chacunes d'un secteur de couronne centré sur l'axe de pivotement 23, et s'étendant par conséquent radialement par rapport à celui-ci. Cependant, les plages de contact 64, 66 d'une même piste principale 60 sont décalées angulairement l'une par rapport à l'autre d'une valeur égale au demi-pas des pistes principales 60, tandis que les deux éléments de contact 24, 26 du curseur sont placés sur un même rayon centré sur l'axe 23.

Sur la figure 2 annexée, on a référencé A le pas angulaire des pistes principales 60 au niveau des plages de contact 66 radialement internes. On a référencé B le décalage angulaire existant entre une plage de contact 64 radialement externe et une plage de contact 66 radialement interne d'une même piste principale 60. Enfin, on a référencé C le pas angulaire des pistes principales 60 au niveau des plages de contact 64 radialement externes.

Pour répondre aux dispositions précitées, le pas angulaire A au niveau des plages 66 radialement internes est égal au pas angulaire C au niveau des plages de contact 66 radialement externes. De plus, l'écart angulaire B entre les plages de contact 64 radialement externes et les plages de contact 66 radialement internes égal la moitié des pas angulaires A et C précités.

De même, sur la figure 2 annexée, on a référencé 28 le rayon commun centré sur les grains de contact 24, 26 et passant par l'axe de pivotement 23.

L'homme de l'art comprendra aisément que grâce aux dispositions précitées, lorsque l'un des éléments de contact du curseur (24 ou 26) est centré sur l'élément de contact associé (64 ou 66) d'une piste 60 ménagée sur le support 52, l'autre élément de contact (26 ou 24) du curseur est centré sensiblement sur l'intervalle ménagé entre deux éléments de contact (66 ou 64) qui lui sont associés des pistes 60 ménagées sur le support.

La largeur des éléments de contacts 24, 26 (le diamètre dans le cas de grains de contact 24, 26 circulaires) est supérieure à l'intervalle séparant deux plages de contact 64 ou 66 de pistes 60 adjacentes. Ainsi, les deux éléments de contact 24, 26 restent chacun en permanence en contact avec l'une au moins des pistes 60. Cette disposition permet d'obtenir une information fiable malgré la discontinuité des pistes 60.

Selon une autre caractéristique avantageuse de l'invention, l'intervalle d ménagé entre deux plages de contact 64 radialement externes et adjacentes égale l'intervalle d ménagé entre deux plages de contact 66 radialement internes et adjacentes.

Pour cela les pistes 60 sont délimitées par des bords longitudinaux non radiaux.

Plus précisément encore, de préférence, chacune des plages de contact 66, 64 est délimitée par des bords longitudinaux qui s'étendent parallèlement à des rayons dressés à partir de l'axe de pivotement 23 et passant par le milieu de l'intervalle défini entre deux plages de contact adjacentes.

On aperçoit sur la figure 2 trois pistes principales 60a, 60b et 60c, juxtaposées.

Les bords longitudinaux adjacents 90 et 91 délimitant les plages de contact 64 radialement externes des deux pistes 60a, 60b sont parallèles au rayon 92 passant par le milieu de l'intervalle défini entre ces deux plages de contact 64. De même, les bords longitudinaux adjacents 93 et 94 délimitant les plages de contact 64 radialement externes des deux pistes 60b et 60c sont parallèles au rayon 95 passant par le milieu de l'intervalle défini entre ces deux plages de contact 64.

De façon similaire les deux bords longitudinaux 96, 97 adjacents délimitant les plages de contact 66 radialement internes des pistes 60a, 60b sont parallèles au rayon 98 passant par le milieu de l'intervalle d défini entre ces deux plages de contact 66. De même les bords longitudinaux 99 et 100 adjacents délimitant les plages de contact 66 radialement internes des pistes 60b et 60c s'étendent parallèlement au rayon 101 passant par le milieu de l'intervalle défini entre ces deux plages de contact 66.

Dans cette mesure les plages de contact 64 radialement externes et les plages de contact 66 radialement internes de chaque piste principale 60 sont reliées par une bande 68 inclinée par rapport à des rayons dressés à partir de l'axe 23. De préférence, ces bandes 68 sont ménagées sur l'extérieur de la piste auxiliaire résistive 70, c'est-à-dire en position adjacente aux plages de contact 64 radialement externes.

Selon un mode de réalisation considéré actuellement comme préférentiel, mais donné à titre d'exemple non limitatif, le rhéostat conforme à la présente invention répond aux caractéristiques suivantes :

—— la plaque support 52 est réalisée en alumine,
— il est prévu 96 pistes principales 60. Celles-ci sont formées de segments s'étendant généralement radialement par rapport à l'axe de pivotement 23. Le pas des pistes angulaires 60 est de l'ordre de 1°. Au niveau de leur extrémité radialement la plus interne les pistes principales 60 ont une largeur de l'ordre de 0,2 mm et l'espacement entre deux pistes 60 adjacentes est de l'ordre de 0,2 mm. La longueur radiale des pistes 60 est de l'ordre de 8 mm. Les pistes 60 sont réalisées par sérigraphie à base d'une pâte électriquement conductrice du type Pd/Ag, telle que la pâte commercialisée par la Société Dupont De Nemours sous la référence 9473,

— la piste auxiliaire résistive 70 est réalisée par dépôt sérigraphique. Elle est continue et s'étend sous forme d'un secteur de couronne, centrée sur l'axe de pivotement 23, entre les plages de contact 64 et 66. Sa largeur radiale est de préférence modulée, comme illustré sur la figure 1 annexée, en fonction de la géométrie du réservoir, de telle sorte que l'information prélevée, (i.e. la mesure de la résistance entre une extrémité de la piste 70 et le curseur) soit toujours proportionnelle au volume de liquide contenu dans le réservoir. La piste auxiliaire 70 peut être réalisée à l'aide d'une pâte électriquement résistante à base d'oxyde de ruthénium, par exemple la pâte commercialisée par la Société Dupont de Nemours sous la référence 1613,

— les grains de contact 24, 26 du curseur, reposant respectivement contre les plages de contact 64 et 66 sont réalisés à base d'un alliage Ag/Ni.

Selon le mode de réalisation préférentiel illustré sur les figures 1 et 2 annexées et précédemment décrit, les plages 64, 66 d'une même piste 60 présentent un décalage angulaire correspondant au demi-pas des pistes, tandis que les éléments de contact 24, 26 du curseur sont placés sur un même rayon.

On a illustré sur la figure 3 annexée une variante de réalisation selon laquelle au contraire les éléments de contact 24, 26 du curseur présentent un décalage angulaire relatif correspondant au demi-pas des pistes 60, tandis que celles-ci sont formées de secteurs rectilignes s'étendant radialement par rapport à l'axe de pivotement 23.

En d'autres termes, selon la variante de réalisation illustrée sur la figure 3 annexée, les plages de contact 64, 66 d'une même piste 60, sont centrées sur un rayon commun dressé à partir de l'axe de pivotement 23. Par contre, l'élément de contact 24 du curseur est centré sur un rayon 30 tandis que l'élément de contact 26 du curseur est centré sur un rayon 32. L'écart angulaire B' entre les rayons 30 et 32 correspond à la moitié du pas angulaire A' défini entre les pistes 60, c'est-à-dire entre deux plages de contact 64 radialement externes et adjacentes et/ou deux plages de contact 66 radialement internes et adjacentes.

L'homme de l'art comprendra aisément que grâce à la variante de réalisation illustrée sur la figure 3 annexée, on obtient de même que lorsque l'un des éléments de contact du curseur 24 ou 26 est centré sur l'élément de contact associé 64 ou 66 d'une piste 60 ménagée sur le support 52, l'autre élément de contact 26 ou 24 du curseur est centré sensiblement sur l'intervalle ménagé entre deux éléments de contact 66 ou 64 qui lui sont associés des pistes 60 ménagées sur le support.

De préférence, dans le cadre de la variante de réalisation illustrée sur la figure 3, l'intervalle d ménagé entre deux plages de contact 64 radialement externes et adjacentes reste identique à l'intervalle d ménagé entre deux plages de contact 66 radialement internes et adjacentes. Pour cela les bords longitudinaux des pistes 60 s'étendent parallèlement à des rayons dressés à partir de l'axe de pivotement 23 et passant par le milieu des intervalles définis entre deux pistes 60 adjacentes. De plus, la piste auxiliaire 70 résistive est également déposée entre les plages de contact 64 radialement externes et les plages de contact 66 radialement internes.

Bien entendu la présente invention n'est pas limitée aux modes de réalisation particuliers qui viennent d'être décrits mais s'étend à toutes variantes conformes à son esprit.

Le cas échéant, l'un des deux éléments de contact du curseur 22 peut être adapté pour coopérer avec une piste de détection de niveau minimum et de génération d'alerte, lorsque le curseur est placé dans une plage de son déplacement correspondant à un niveau de carburant minimal dans le réservoir d'un véhicule automobile.

**Revendications**

1. Dispositif de mesure comportant un transducteur du type rhéostat comprenant deux ensembles coopérant, l'un formé d'un curseur mobile (22), l'autre d'un support (52) en matériau électriquement isolant revêtu d'une pluralité de pistes principales (60) s'étendant en regard du trajet de déplacement du curseur et présentant entre elles une résistance contrôlée, dans lequel le curseur (22) et chacune des pistes (60) possèdent plusieurs éléments de contact (24, 26 ; 64, 66) respectivement en regard, et les éléments de contact de l'un au moins des deux éléments sont décalés relativement dans la direction de déplacement du curseur, de telle sorte que lorsqu'un élément de contact (24, 26) du curseur est centré sur l'élément de contact (64, 66) associé d'une piste (60) ménagée sur le support, un autre élément de contact (26, 24) du curseur est centré sensiblement sur l'intervalle ménagé entre deux éléments de contact (66, 64) qui lui sont associés des pistes ménagées sur le support (52), caractérisé par le fait que le curseur et chacune des pistes possèdent deux éléments de contact respectivement en regard, et le décalage (B) défini entre deux éléments de contact (24, 26 ; 64, 66) d'un même ensemble égale la moitié du pas (A) des pistes principales (60).

2. Dispositif de mesure selon la revendication 1, caractérisé par le fait que le curseur (22) est mobile à rotation, et par le fait que les deux éléments de contact (24, 26 ; 64, 66) de chaque ensemble sont prévus à des distances différentes de l'axe de rotation (23).

3. Dispositif de mesure selon l'une des revendications 1 à 2, caractérisé par le fait que les pistes principales s'étendent pour l'essentiel radialement par rapport à l'axe de pivotement (23).

4. Dispositif de mesure selon l'une des revendications 1 à 3, caractérisé par le fait que le même espace (d) est prévu entre les deux séries d'éléments de contact (64, 66) prévus sur le support isolant (52).

5. Dispositif de mesure selon l'une des revendications 1 à 4, caractérisé par le fait que les pistes principales (60) sont réalisées en matériau électriquement conducteur, de préférence par sérigraphie et par le fait qu'une piste auxiliaire (70) en matériau électriquement résistant est superposée aux pistes principales (60), de préférence par sérigraphie.

6. Dispositif de mesure selon la revendication 5, caractérisé par le fait que la piste auxiliaire résistive (70) est placée entre deux éléments de contact (64, 66) d'une même piste principale (60).

7. Dispositif de mesure selon l'une des revendications 1 à 6, caractérisé par le fait que les deux éléments de contact (64, 66) de chaque piste principale (60) présentent un décalage angulaire relatif (B) égal à la moitié du pas angulaire (A) des pistes tandis que les deux éléments de contact (24, 26) du curseur sont centrés sur un même rayon.

8. Dispositif de mesure selon la revendication 7, caractérisé par le fait que les deux éléments de contact (64, 66) de chaque piste principale (60) sont formés de plages de contact s'étendant radialement en regard de l'axe de rotation du curseur, et reliées entre elles par une bande de liaison (68) non radiale.

9. Dispositif de mesure selon l'une des revendications 1 à 6, caractérisé par le fait que le curseur comprend deux éléments de contact (24, 26) présentant un décalage angulaire relatif (B') égal à la moitié du pas (A') des pistes principales (60), tandis que celles-ci sont formées de segment rectilignes s'étendant radialement par rapport à l'axe de pivotement (23) du curseur.

10. Dispositif de mesure selon l'une des revendications 1 à 9, caractérisé par le fait que les éléments de contact (24, 26) du curseur possédent une largeur supérieure à l'intervalle (d) défini entre deux éléments de contact associés adjacents (64, 66) définis au niveau de pistes principales, de telle sorte que chaque élément de contact du curseur reste en permanence en contact avec l'une au moins des pistes principales (60).

**Patentansprüche**

1. Meßgeber mit Widerstandsumsetzer umfassend zwei miteinander zusammenwirkende Baugruppen, deren eine von einem beweglichen Läufer (22) und deren andere von einem Träger (52) aus elektrisch isolierendem Material mit einer Vielzahl von Hauptspuren (60) gebildet sind, die sich quer zur Bewegungsrichtung des Läufers (22) erstrecken und untereinander einen definierten Widerstand aufweisen, wobei der Läufer (22) und jede der Spuren (60) mehrere jeweils gegenüberliegende Kontaktelemente (24, 26 ; 64, 66) aufweisen, und die Kontaktelemente mindestens einer der zwei Baugruppen relativ in Bewegungsrichtung des Läufers so versetzt sind, daß bei Zentrierung eines Kontaktelementes (24, 26) des Läufers über dem Kontaktelement (64, 66) einer auf den Träger (52) aufgebrachten Spur (60) ein anderes Kontaktelement (24, 26) des Läufers genau auf den Zwischenraum zwischen zwei Kontaktelementen (66, 64) der Spuren des Trägers (52) zentriert ist, dadurch **gekennzeichnet**, daß der Läufer und jede Spur zwei einander zugeordnete Kontaktelemente aufweisen, und der definierte Versatz (B) zwischen zwei Kontaktelementen (24, 26 ; 64, 66) derselben Baugruppe der Hälfte der Schrittweite (A) zwischen zwei Hauptspuren (60) ist.

2. Meßgeber nach Anspruch 1, dadurch **gekennzeichnet**, daß der Läufer (22) drehbeweglich ist, und daß die zwei Kontaktelemente (24, 26 ; 64, 66) jeder Baugruppe in unterschiedlichen Abständen zur Rotationsachse (23) angeordnet sind.

3. Meßgeber nach einem der Ansprüche 1 oder 2, dadurch **gekennzeichnet**, daß die Hauptspuren sich im wesentlichen radial zur Drehachse (23) erstrecken.

4. Meßgeber nach einem der vorangehenden Ansprüche, dadurch **gekennzeichnet**, daß gleicher Abstand (d), zwischen den Kontaktelementen der beiden Kontaktelementreihen (64, 66) auf dem isolierenden Träger (52) vorgesehen ist.

5. Meßgeber nach einem der vorangehenden Ansprüche, dadurch **gekennzeichnet**, daß die Hauptspuren (60) aus elektrisch leitendem Material geformt sind, vorzugsweise im Siebdruckverfahren, und daß den Hauptspuren (60) eine Hilfsspur (70) aus einem elektrisch resistivem Material überlagert ist, vorzugsweise im Siebdruckverfahren.

6. Meßgeber nach Anspruch 5, dadurch **gekennzeichnet**, daß die Hilfsspur (70) zwischen zwei Kontaktelementen (64, 66) einer Hauptspur (60) zu liegen kommt.

7. Meßgeber nach einem der vorangehenden Ansprüche, dadurch **gekennzeichnet**, daß die zwei Kontaktelemente (64, 66) jeder Hauptspur (60) einen relativen Winkelversatz (D) gleich der Hälfte der Winkelschrittweite (A) der Spuren aufweisen, während die zwei Kontaktelemente (24, 26) des Läufers auf demselben Radius zentriert sind.

8. Meßgeber nach Anspruch 7, dadurch **gekennzeichnet**, daß die zwei Kontaktelemente (64, 66) jeder Hauptspur (60) als Kontaktflächen ausgebildet sind, die sich radial zur Rotationsachse des Läufers erstrecken und die untereinander durch ein nicht radiales Verbindungsstück (68) verbunden sind.

9. Meßgeber nach einem der Ansprüche 1 bis 6, dadurch **gekennzeichnet**, daß der Läufer zwei Kontaktelemente (24, 26) umfaßt, die einen relativen Winkelversatz (B') aufweisen, der die Hälfte der Schrittweite (A') der Hauptspuren (60) beträgt, und aus geradlinigen Abschnitten gebildet sind, die sich radial zur Drehachse (23) des Läufers erstrecken.

10. Meßgeber nach einem der vorangehenden Ansprüche, dadurch **gekennzeichnet**, daß die Kontaktelemente (24, 26) des Läufers eine Breite haben, die größer als der Abstand (d) zwischen zwei benachbarten Kontaktelementen (64, 66) auf dem Niveau der Hauptspuren ist, derart, daß jedes Kontaktelement des Läufers immer mit mindestens einer der Hauptspuren (60) in Kontakt ist.

## Claims

1. Measuring device having a rheostat-type transducer comprising two cooperating assemblies, one formed by a movable pointer (22) and the other by a support (52) of electrically insulating material coated with a plurality of main tracks (60) extending opposite the path of travel of the pointer and having between them a monitored resistor, in which device the pointer (22) and each of the tracks (60) have a plurality of respectively opposite contact elements (24, 26 ; 64, 66), and the contact elements of at least one of the two elements are relatively offset in the direction of travel of the pointer such that when a contact element (24, 26) of the pointer is centred on the associated contact element (64, 66) of a track (60) made on the support, another contact element (26, 24) of the pointer is centred substantially on the interval made between two contact elements (66, 64) associated with it of the tracks made on the support (52), characterized in that the pointer and each of the tracks have two respectively opposite contact elements, and the offset (B) defined between two contact elements (24, 26 ; 64, 66) of a single assembly equals half the pitch (A) of the main tracks (60).

2. Measuring device according to Claim 1, characterized in that the pointer (22) is rotatably movable, and in that the two contact elements (24, 26 ; 64, 66) of each assembly are provided at different spacings from the axis of rotation (23).

3. Measuring device according to one of Claims 1 to 2, characterized in that the main tracks extend substantially radially with respect to the axis of pivoting (23).

4. Measuring device according to one of Claims 1 to 3, characterized in that the same space (d) is provided between the two rows of contact elements (64, 66) provided on the insulating support (52).

5. Measuring device according to one of Claims 1 to 4, characterized in that the main tracks (60) are made of an electrically conductive material, preferably by screen printing, and in that a secondary track (70) of electrically resistive material is placed on top of the main tracks (60), preferably by screen printing.

6. Measuring device according to Claim 5, characterized in that the resistive secondary track (70) is placed between two contact elements (64, 66) of a single main track (60).

7. Measuring device according to one of Claims 1 to 6, characterized in that the two contact elements (64, 66) of each main track (60) have a relative angular offset (B) equal to half the angular pitch (A) of the tracks, while the two contact elements (24, 26) of the pointer are centred on a single radius.

8. Measuring device according to Claim 7, characterized in that the two contact elements (64, 66) of each main track (60) are formed by contact zones extending radially opposite the axis of rotation of the pointer, and are connected to one another by a non-radial connection strip (68).

9. Measuring device according to one of Claims 1 to 6, characterized in that the pointer comprises two contact elements (24, 26) having a relative angular offset (B') equal to half the pitch (A') of the main tracks (60), while the latter are formed by rectilinear segments extending radially with respect to the axis of pivoting (23) of the pointer.

10. Measuring device according to one of Claims 1 to 9, characterized in that the contact elements (24, 26) of the pointer have a width greater than the interval (d) defined between two adjacent associated contact elements (64, 66) defined at the level of main tracks, such that each contact element of the pointer remains permanently in contact with at least one of the main tracks (60).

FIG.1

EP 0 310 467 B1

60a  91  60b  93  60c  94  64

64  d

64

64

90

68  64  24

92  95

28

97

96  101

d  26

66  66

98  99  66

66  C  A  100

66  B

FIG_2

64  64  24  64

64  d

30

B'

A'

26

d  66

FIG_3  66  66  32